# EUROPÄISCHE PATENTSCHRIFT

(11) **EP 2 103 887 B1**
(45) Veröffentlichungstag und Bekanntmachung des Hinweises auf die Patenterteilung: **08.05.2019**
(21) Anmeldenummer: 09004016.3
(22) Anmeldetag: 20.03.2009
(51) Int. Cl.: G06F 3/0362, F24H 9/20, G06F 3/0484

(54) **Haustechnikregler und Verfahren zur Regelung und/oder Steuerung eines Haustechnikgerätes**
Home technology regulator and method for regulating and/or controlling a household appliance
Régulateur domestique et procédé destiné au réglage et/ou à la commande d'un appareil domestique

(30) Priorität: 20.03.2008 DE 102008015385
(43) Veröffentlichungstag der Anmeldung: 23.09.2009
(73) Patentinhaber: Stiebel Eltron GmbH & Co. KG, 37603 Holzminden (DE)
(72) Erfinder: Hildebrand, Mirko, 32139 Spenge (DE); Herrs, Martin, 37671 Höxter (DE)

(56) Entgegenhaltungen:
- DE-A1-102005 027 199
- DE-A1-102005 049 802
- DE-U1-202004 020 820

## Beschreibung

Die Erfindung betrifft einen Haustechnikregler gemäß Anspruch 1. Der Haustechnikregler ist mit einer Vorrichtung enthaltend ein Eingabefeld und ein Display, wobei das Eingabefeld wenigstens einen näherungssensitiven Sensor aufweist, der mit einer Auswerteelektronik verbunden ist, die bei einer Berührung oder einer starken Annäherung eines elektrisch leitfähigen Gegenstandes an dem Sensor eine Änderung des elektrischen Zustands des Sensors erfasst und dementsprechend ein Positionssignal an eine Elektronik abgibt.

Weiterhin betrifft die Erfindung ein Verfahren zur Regelung und/oder Steuerung eines Haustechnikgerätes gemäß Anspruch 6. Das Haustechnikgerät ist mit einer Vorrichtung, die ein Eingabefeld und ein Display aufweist, wobei das Eingabefeld wenigstens einen näherungssensitiven Sensor enthält, der bei einer Berührung oder starken Annäherung eines elektrisch leitfähigen Gegenstandes an den Sensor den elektrischen Zustand des Sensors oder eine Änderung des Zustands erfasst und dementsprechend ein Positionssignal an eine Elektronik abgibt.

Im folgenden ist als Anwendungsbeispiel eine Vorrichtung für eine Wärmepumpe beschrieben.

Aus DE 103 45 300 A1 ist ein Regelgerät, insbesondere für eine Wärmepumpe, bekannt. Das Regelgerät empfängt aktuelle Daten der Wärmepumpe und verarbeitet diese in einem Mikrocontroller. Mit einem vom Nutzer bedienbaren Einsteller wird die Vorwahl eines Sollwertes vorgenommen. Der Mikrocontroller steuert eine Anzeigeeinrichtung wie ein Display, die die jeweils eingestellte Solltemperatur und weitere Daten anzeigt.

Die DE 10 2006 034 057 A1 zeigt ein Haustechniksystem mit mindestens einem Haustechnikgerät, insbesondere zur Erwärmung von Brauchwasser. Das Haustechniksystem weist eine Überwachungsvorrichtung zum Überwachen von wasserspezifischen Parametern auf. Zum Empfangen von wasserspezifischen Parametern und/oder gerätespezifischen Parametern ist eine Empfangsschnittstelle und zum Ausgeben von wasserspezifischen und/oder gerätespezifischen Parametern eine Ausgangsschnittstelle vorgesehen. Weiterhin weist das Haustechniksystem eine Anzeigeeinheit zum Anzeigen der durch die Ausgangsschnittstelle ausgegebenen wasserspezifischen und/oder gerätespezifischen Parameter auf.

Aus der DE 20 2004 020 820 U1 geht ein berührungssensitives Bedienfeld insbesondere eines Kochfeldes hervor. Über ein Sensorfeld wird die Heizleistung des Kochfeldes aktiviert und geregelt. Der Benutzer aktiviert zuerst die Steuerung des Heizelementes, indem er seinen Finger über dem entsprechenden Heizelement-Anwahl-Sensorfeld plaziert. Um dieses Anwahl-Sensorfeld ist ein umlaufendes Ortssensorfeld angeordnet, mit dem der Benutzer die Leistungmenge, die er dem Heizelement zuordnen will, auswählt. Das umlaufende OrtsSensorfeld ist dabei mit einem Pfeil gekennzeichnet, um eine Startposition zu markieren. Dieses Dokument offenbart den Oberbegriff des Anspruchs 1.

Die DE 10 2005 049 802 A1 beschreibt eine Haushaltsgerätebedienvorrichtung mit einem berührungsempfindlichen, ringförmigen Sensorfeld hervor, dass wenigstens zwei um ein Zentrum angeordnete Sensorflächen zum Detektieren eines Winkels eines Berührungspunktes umfasst. Den Sensorflächen sind verschiedene Wertebereiche zugeordnet. Dieses Dokument offenbart den Oberbegriff des Anspruchs 6.

Aufgabe der Erfindung ist es, die Bedienung eines Haustechnikgerätes zu vereinfachen und insbesondere ein Verfahren bereitzustellen, mit dem die Bedienung und Regelung und/oder Steuerung eines Haustechnikgerätes störungsfrei erfolgt.

Gelöst ist diese Aufgabe durch die Merkmale des Anspruchs 1. Vorteilhafte Ausführungsformen der Erfindung sind in den Unteransprüchen angegeben. Gemäß Anspruch 6 ist ein Verfahren zur Regelung und/oder Steuerung eines Haustechnikgerätes beschrieben.

Ein Sensor und eine Auswerteelektronik bilden in vorteilhafter Weise eine Einheit, die mit einer ersten Schnittstelle, insbesondere SPI-Schnittstelle, mit einer Steuer- und/oder Regelungselektronik verbunden ist. Ein Haustechnikregler, insbesondere einer Solaranlage, einer Fotovoltaikanlage, eines Lüftungsgeräts oder eines Warmwasserbereiters ist über eine zweite Schnittstelle, insbesondere CAN-Bus, mit der Steuer- und/oder Regelungselektronik verbunden. Der Sensor ist hinter einer harten Platte eines Gehäuses des Hauttechnikreglers angeordnet. Die Platte ist geschlossen und einstückig ausgebildet, damit kein Wasser oder Schmutz in die Vorrichtung gelangen kann. Durch die einstückige Ausführung, die durch die Verwendung eines näherungssensitiven Sensors ermöglicht ist, sind keine Bedienknöpfe erforderlich, was zudem den Herstellungsprozess vereinfacht. Außerdem wird der Herstellungsprozess dadurch vereinfacht, dass durch die Verwendung eines näherungssenstiven Sensors eine harte Platte verwendet werden kann, da das Material des Eingabefeldes keinen Druck auf eine hinterlegte Taste weitergeben muss. Vorzugsweise besteht die Platte aus einem nichtmetallischen Werkstoff, insbesondere aus Kunststoff oder Glas, da diese Werkstoffe die Änderung des elektrischen Zustand bei Annäherung eines elektrisch leitfähigen Gegenstandes begünstigen. Vorzugsweise besteht die Platte wenigstens im Bereich des Displays aus einem durchsichtigen Material.

Erfindungsgemäß besteht die Platte aus einem durchsichtigen Material im Bereich des Displays und aus einem undurchsichtigen Material, insbesondere einem farbigen Material, außerhalb des Displays. Vorzugsweise ist das Gehäuse nach dem Inmould-design-Verfahren herstellt. Hierdurch ist die einstückige Ausführung der Platte besonders einfach herstellbar, da dieses Verfahren ermöglicht, dass beispielsweise keine Kanten oder Nähte im Bereich des Displays eingebracht werden müssen. Im Bereich des Eingabefeldes sind Bedruckungen angeordnet, die auch Tasten kennzeichnen.

In einer bevorzugten Ausführungsform ist in unmittelbarer Nähe des Sensors wenigstens ein Tastfeld angeordnet. Dies hat den Vorteil, dass dem Regler bei Bedarf neben dem Sensor weitere Funktionen zugeordnet werden können. Die Nähe des Tastfeldes zum Sensor ermöglicht eine erhöhte Benutzerfreundlichkeit, da der Benutzer bei der Auswahl verschiedener Funktionen nicht seinen Finger über das gesamte Eingabefeld bewegen muss. Vorzugsweise ist das wenigstens eine Tastfeld bereits bei der Herstellung des Eingabefeldes hinterlegt, so dass es bei Bedarf nur mit einer entsprechenden Beschriftung und einer entsprechenden Software ausgestattet werden muss.

In einer weiteren vorteilhaften Ausgestaltung der Erfindung weist die Platte im Bereich des Sensors eine Vertiefung zum Führen des elektrisch leitfähigen Gegenstandes, insbesondere eines Fingers, auf. Hierdurch ist das Eingabefeld besonders benutzerfreundlich ausgebildet. Durch das Führen des Fingers in der Vertiefung sind Fehlbedienungen weitgehend ausgeschlossen.

In einer vorteilhaften Ausgestaltung ist das Display über eine dritte Schnittstelle mit der Steuer- und/oder Regelungselektronik verbunden. Beim Verfahren zur Regelung und/oder Steuerung eines Haustechnikgerätes, insbesondere einer Wärmepumpe, unterscheidet die Elektronik zwischen der Funktion eines Sensors als Taste und als Inkrementalgeber, wobei eine Taste als getastet erkannt wird, wenn ein Wert der Auswerteelektronik in einem definierten Zeitfenster, insbesondere in einem Zeitfenster von 50-800 ms in einem vorgegebenen Wertebereich angestanden hat, oder eine Inkremental- oder Drehbewegung erkannt wird, wenn sich der Wert aufeinanderfolgend vergrößert oder verkleinert, insbesondere wenn wenigstens hintereinander drei verschiedene, größer oder kleiner werdende Werte in der Steuer- und Regelungselektronik in einem definierten Zeitfenster, insbesondere in einem Zeitfenster von 50-800 ms, erfasst werden.

Weiterhin wird mit dem Verfahren in einer vorteilhaften Ausgestaltung ermöglicht, dass die Vorrichtung nach Ablauf einer Zeit, insbesondere 5 - 20 min nach einer letzten Bedienung, in einen Schlafzustand oder deaktivierten Grundzustand fällt und für die Steuerung und/oder Regelung der Vorrichtung oder des Gerätes unbenötigte Teile, insbesondere das Display, abgeschaltet werden oder dessen Beleuchtung reduziert wird.

Um die Anlage vor versehentlichem Bedienen zu schützen, gibt es eine Aktivierungsfunktion oder auch Wake-up-Funktion. Mittels der Wake-up-Funktion wird die Vorrichtung aus dem deaktivierten Grundzustand, insbesondere dem schlafenden Zustand, in einen Bedienzustand umgeschaltet, wenn der Sensor vom Benutzer länger als einen vorgegebenen Mindestzeitraum von 1 - 10 sek., insbesondere 5 sek. lang gedrückt gehalten wird. Unter 'Drücken des Sensors' wird in vorteilhafter Weise eine Berührung des Bedienfeldes verstanden, dahinter liegt unmittelbar der Sensor.

Befindet sich das Bedienteil im deaktivierten Grundzustand (Schlafend), darf ein Berühren des Sensorfeldes nicht zu einem Scrollen oder einer Eingabebestätigung führen. In diesem Zustand kann über das Sensorfeld keine Funktion außer die Wake-up-Funktion ausgelöst werden. Über eine definierte Taste, hier die Menütaste, wird die Wake-up-Funktion vorteilhaft ausgelöst. Dazu muss sie vom Benutzer länger als einen vorgegebenen Zeitraum von ca. 5 sek. lang gedrückt gehalten werden. Bei der ersten Berührung wird durch eine Textausgabe auf dem Display signalisiert, dass die Menütaste 5 sek. lang zu drücken ist. Findet 20 min lang keine Berührung auf der Sensorfläche statt, wird das Sensorfeld gesperrt und die Bedieneinheit "schläft" wieder.

Im Schlafzustand oder deaktivierten Grundzustand führt insbesondere ein versehentliches oder ein kurzzeitiges Berühren des Sensors bzw. Bedienfelds nicht zu einem Scrollen oder einer Eingabebestätigung. Die Vorrichtung ist also im Schlafzustand nicht bedienbar.

Hält der Benutzer eine dafür vorgesehene Taste, hier eine Menütaste, gedrückt, um die Wake-up-Funktion auszulösen, wird innerhalb der Wake-up-Bestätigungszeit mit einer Verzögerungszeit von ca. 1 sek. eine Empfindlichkeitsanpassung durchlaufen, um sicherzustellen, dass der Benutzer den Vorgang auch wirklich abschliessen möchte.

Als vorteilhaft hat sich erwiesen, wenn die Empfindlichkeitsanpassung insbesondere bei einer ersten Berührung des Sensors innerhalb etwa 1 sek. gestartet wird, um die Vorrichtung zu bedienen, wobei die Empfindlichkeit nach einer ersten Berührung so geändert wird, dass kein Signal, keine Signaländerung oder Position erkannt wird, also die Empfindlichkeit mindestens stark reduziert ist. Dann wird die Empfindlichkeit so lange erhöht, bis eine optimale Erkennung der Berührung entsprechend einer vorgegebenen Intensität erfolgt. Dies erfolgt, um mögliche menschliche Kapazitätsschwankungen, die durch Handschuhe, Massenunterschiede der Finger etc. hervorgerufen werden, auszugleichen. Mit Start der Empfindlichkeitsanpassung wird der Sensor oder die Auswerteelektronik in seiner/ihrer Empfindlichkeit so weit herabgesetzt, dass er/sie keine Berührung mehr erkennt. Damit die Ermittlung der Wake-up-Zeit weiter gestoppt werden kann, wird beim Start der Empfindlichkeitsanpassung ein Bitsignal eingefroren und beim Beenden wieder freigegeben. Im nächsten Schritt wird der Empfindlichkeitswert um einen vorgegebenen Wert verringert. Dies geschieht so lange, bis die Auswerteelektronik oder der Sensor die Berührung wiedererkennt. Der Benutzer drückt in der Regel zu Anfang der Berührung stärker, insbesondere bei dieser Funktion, auf die Sensorfläche, so dass der ermittelte Empfindlichkeitswert zu hoch angesetzt ist. Außerdem bedarf es auf dem Sensor einer höheren Empfindlichkeit, um eine Kreisbewegung optimal zu erfassen. Dies lässt sich durch eine Multiplikation des gewonnenen Wertes mit 0,75 erreichen. Der so angepasste Wert wird nun auf die Steuer- und/oder Regeleinrichtung übertragen und die Empfindlichkeitsanpassung beendet. Wenn der Vorgang abgebrochen oder der Wert auf Null gelaufen ist, wird ein Standard-Empfindlichkeitswert übertragen.

In den Schlafmodus fällt die Vorrichtung insbesondere nach einer Zeit von 5 - 20 min. Sollte der Bediener das Bedienfeld bzw. den Sensor vor Ablauf dieser Zeit berühren müssen oder wollen, ohne dass eine Eingabe erfolgt, wählt er im Menü die Wischfunktion aus und aktiviert diese, wodurch das Bedienfeld und der Sensor für einen vorgegebenen Zeitraum gesperrt werden. Somit ist es möglich, dass - ohne dass der Schlafmodus abgewartet werden muss - über eine Wischfunktion eine spontane Sperrung es Bedienfeldes für einen vorgegebenen Zeitraum von ca. 15 sek - 5 min, insbesondere ca. 60 sek eingeleitet wird, wenn ein Menüpunkt 'Wischfunktion' ausgewählt und bestätigt wird. Hiermit wird insbesondere eine störungsfreie Reinigung der Vorrichtung ermöglicht, ohne dass man auf den Schlafmodus warten muss. Über die Wischfunktion wird eine spontane Sperrung der Vorrichtung eingeleitet. Wird der Punkt ausgewählt und bestätigt, wird das Sensorfeld für 60 sek. gesperrt. Während dieser Zeit wird ein Countdown im Display angezeigt.

Um große Wertbereiche zeitnah verstellen zu können, kommt der sogenannte Scrollbooster zum Einsatz. Der Scrollbooster vergleicht ständig den Positionswert zum Zeitpunkt x mit dem Positionswert zum Zeitpunkt x-1 und bildet den Differenzbetrag der Positionswerte. Überschreitet dieser einen vordefinierten, änderbaren Wert, wird die normale Schrittweite mit Hilfe eines Multiplikators, der wiederum frei einstellbar ist, multipliziert. So wird die normale Schrittweite vervielfacht und der Wunschwert wird mit viel weniger Umdrehungen erreicht. Die normale Schrittweite wird demnach in vorteilhafter Weise beim Drehen oder Scrollen, abhängig von einem Differenzwert, der bei einem ständigen Vergleich der Positionswerte zum Zeitpunkt x mit dem Positionswert x-1 gebildet wird, vervielfacht, damit der gewünschte Wert schneller erreicht wird.

Ein eingegebener Sollwert wird nach einem festgelegtem Zeitraum, ca. 2-5 sek., nachdem keine Änderung, kein Drehen oder Inkrementieren mehr erfolgt, festgelegt oder durch eine tastende Berührung nach Art einer Entertaste festgelegt. Wird wieder weitergedreht, erfolgt erneut eine entsprechende Änderung des einzustellenden Sollwertes. Ein Rücksprung in eine höhere Menüebene bis hin zum Verlassen des Menübereiches erfolgt ebenfalls nach Ablauf einer vorgegebenen Zeit, von ca. 2- 10 sek. bis hin zur Betriebsanzeige und letztlich in vorteilhafter Weise bis in den Schlafzustand nach ca. 5 - 20 min.

Bei der Bedienung des Eingabefeldes werden vorzugsweise Eingabewerte für Parameter am Display angezeigt und außerhalb der Zeiten der Bedienung Soll- oder Istwerte am Display angezeigt.

In einem Ausführungsbeispiel ist der Sensor und das Display als eine Einheit ausgebildet, insbesondere als ein Touchscreen.

Das Verfahren wird zur Regelung und/oder Steuerung einer Wärmepumpe, einer Solaranlage, einer Fotovoltaikanlage, eines Lüftungsgerätes, eines elektrischen Heizgerätes oder eines Warmwasserbereiters verwendet.

Ferner ist es vorteilhaft, wenn die Regelung der Wärmepumpe mit der Steuer- und/oder Regeleinrichtung eine Einheit bildet.

In einem vorteilhaftem Ausführungsbeispiel des Verfahrens werden abhängig von der Dauer, in der der elektrisch leitfähige Gegenstand auf den Sensor wirkt und ein Wert der Auswerteelektronik angestanden hat, unterschiedliche Bedienfunktionen bereitgestellt. Berührt der Benutzer das Eingabefeld über einen längeren Zeitraum, sind unterschiedliche Möglichkeiten denkbar. In einem Ausführungsbeispiel schaltet die Elektronik von einem ausgeschalteten Zustand in den eingeschalteten Zustand, danach in eine Tastfunktion, in eine Scrollfunktion und danach wieder in den ausgeschalteten Zustand. In einer weiteren Ausführungsform schaltet die Elektronik bei Berührung über einen längeren Zeitraum in eine Schlaffunktion. In einer weiteren Ausgestaltung der Erfindung schaltet die Elektronik in einer Menüführung abhängig von der Dauer der Berührung in verschiedene Untermenüs, beispielsweise in das Untermenü "Temperatur" nach 2 s, in das Untermenü "Wasserdurchfluss" nach 4 s, etc.
Fig. 1 zeigt eine Vorrichtung mit einem Display und einem Eingabefeld,
Fig. 2 zeigt die Belegung des Sensorfeldes mit Tasten,
Fig. 3 zeigt die Verschaltung der Vorrichtung mit einer Wärmepumpe,
Fig. 4 zeigt ein Menü im Display außerhalb der Bedienung,
Fig. 5 zeigt das Display während der Bedienung,
Fig. 6 zeigt am Display die Änderung eines Sollwertes bei einer Drehbewegung am Bedienfeld
Fig. 7 zeigt am Display die Änderung einer Zeiteinstellung mittels Drehbewegung,
Fig. 8 zeigt das Display während der Wischfunktion,
Fig. 9 zeigt die Anzeige einer Heizkurve am Display,
Fig. 10 zeigt die Vorrichtung in einem weiteren Ausführungsbeispiel.

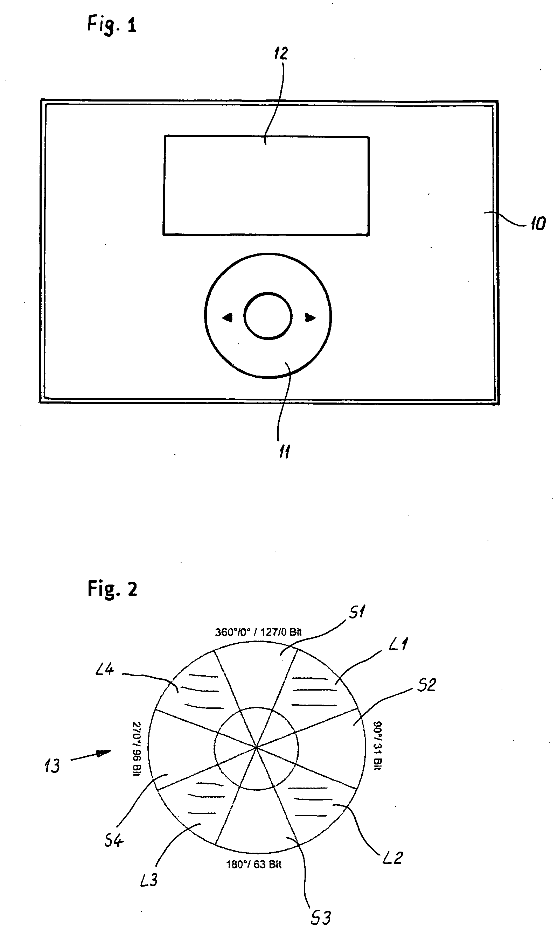

Fig. 1 zeigt eine Vorrichtung 10 mit einem Eingabefeld 11 und einem Display 12. Hinter dem Eingabefeld 11 ist ein Sensor 13 sowie eine Auswerteelektronik 14 angeordnet (in Fig. 1 nicht sichtbar). Die Vorrichtung 10 ist in einem Ausführungsbeispiel von einem nicht dargestellten Haustechnikgerät, insbesondere einer Wärmepumpe, einer Solaranlage, einer Fotovoltaikanlage, einem Lüftungsgerät, einem elektrischen Heizgerät oder einem Warmwasserbereiter entfernt angeordnet und mit diesem über Kabel, Funk oder andere Kommunikationsmittel verbunden. In anderen Ausführungsbeispielen ist die Vorrichtung 10 direkt auf dem Haustechnikgerät angebracht. Weiterhin vorteilhaft ist die Integration der Vorrichtung 10 in einem Haustechnikgerät, so dass kein separates Gehäuse für die Vorrichtung erforderlich ist. Dies kann das gleiche Haustechnikgerät sein, welches von der Vorrichtung gesteuert oder geregelt wird, oder auch eines, welches nicht von der Vorrichtung gesteuert oder geregelt wird.

Ein entsprechender Sensor 13 ist schematisch in Fig. 2 gezeigt. Bereiche S1, S2, S3 und S4 des Sensors sind mit Funktionstasten belegt, wodurch definierte Funktionen, insbesondere Aufruf des Menüs, welche in einer Steuer- und/oder Regelungselektronik 30 in vorteilhafter Weise mit einem Mikrocontroller der Vorrichtung 10 abgespeichert sind, aufgerufen werden.

Im Ausführungsbeispiel gemäß Fig. 2 sind zwischen den Bereichen S1, S2, S3 und S4 weitere Bereiche L1, L2, L3 und L4 angeordnet, für die keine Funktion hinterlegt ist. Dies hat den Vorteil, dass die Tastenerkennung noch eindeutiger ist und des weiteren, dass zu einem späteren Zeitpunkt diese Bereiche L1, L2, L3 und L4, z.B. durch ein Software-Update der Vorrichtung 10, mit weiteren Funktionen belegt werden können. Hierfür ist die Vorrichtung 10 mit einer vierten Schnittstelle ausgerüstet, insbesondere um einen PC oder ein Netzwerk anzuschließen; die Verbindung kann per Kabelanschluss, Funk, Powerline oder auch anderen Techniken erfolgen.

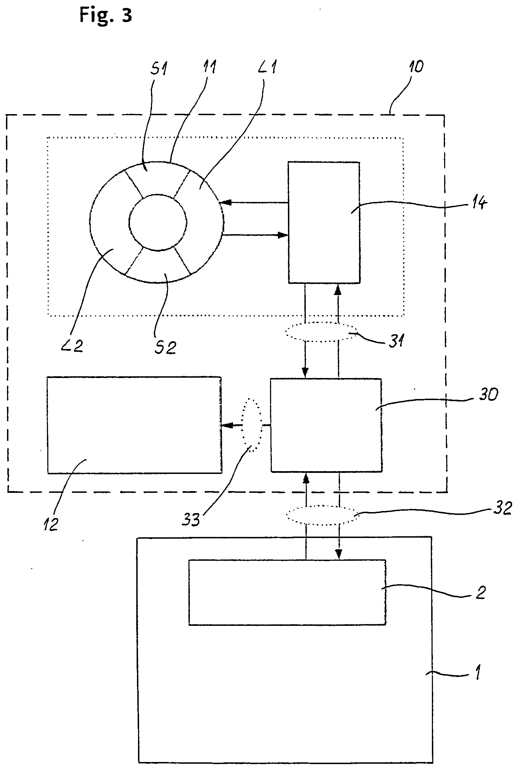

In Fig. 3 ist die Vorrichtung 10 mit einem Bedienfeld 11 mit zwei Tasten S1 und S2, die Funktionen aufweisen, und zwei Tasten L1 und L2 ohne Belegung versehen. Hinter dem Bedienfeld 11 ist nicht dargestellt der Sensor 13 angeordnet, der mit der Auswerteelektronik 14 verbunden ist. Die Auswerteelektronik 14 wiederum ist über eine erste Schnittstelle 31, insbesondere einem SPI-Bus, mit der Steuer- und/oder Regelungselektronik 30 verbunden. Das Display 12 ist über eine dritte Schnittstelle 33 mit der Steuer- und/oder Regelungselektronik 30 verbunden. Die Wärmepumpe 1 und/oder deren Regelgerät 2 ist mit der Vorrichtung 10 über eine zweite Schnittstelle 32, insbesondere einen CAN-Bus, verbunden.

Die kreisrunde Sensorfläche des Sensors 13 ist in vorteilhafter Weise in drei nicht dargestellte mäanderförmig ineinandergreifende Elektroden aufgeteilt. Diese bilden untereinander kapazitiv gekoppelte Flächen. Diese Elektroden werden zyklisch durch Bursts aufgeladen. Wird ein elektrisch leitfähiger Gegenstand, wie ein menschlicher Finger, in die elektrischen Felder eingebracht, kommt es zu einem Ladungstransfer. Diese Ladungsänderung wird in der Auswerteelektronik 14 ausgewertet und vorteilhaft in einem 8-Bit-Signal kodiert ausgegeben. Durch das Bit-Signal lässt sich die exakte Position der Ladungsverschiebung in Winkelgrade umrechnen. Um den Sensor 13 nicht nur zum Verändern eines Parameters benutzen zu können, ist über eine Software eine Koordinaten-Tastenzuordnung realisiert. Bereiche S1, S1, S3 und S4 werden als Tasten definiert und über die 8-Bit-Codierung (0-256) festgelegt, zwei Tasten haben gemäß Fig. 3 dabei eine Funktion, im Ausführungsbeispiel gemäß Fig. 2 sind vier Tasten mit einer Funktion belegt. Der Winkelbereich von 360° wird somit auf 256 Einheiten aufgeteilt. Im Ausführungsbeispiel gemäß Fig. 3 werden nur vier Tasten verwendet, es können aber auch mehr Tasten definiert werden.

Ein Tastenwert entsprechend einer 8-Bit-Codierung, wird mit einer Toleranz, also Wert + Toleranz versehen, um die Tastenfläche auszudehnen. Eine Taste wird als getastet erkannt, wenn der Wert in einem definierten Zeitfenster mit einem vorteilhaften Bereich von 50 - 800 ms angestanden hat und im jeweiligen definierten Wertebereich lag. Liegt das Signal außerhalb des Zeitfensters oder der Werteberereiche der Tasten, wird das Tasten nicht verarbeitet. Die Zeitdauer, in der das Tastensignal anlag, lässt sich über zwei verschiedene Möglichkeiten ermitteln. Die Signale werden kontinuierlich in einem Array des Mikrocontrollers der Steuer- und/oder Regelungselektronik 30 abgelegt, so dass bei einer kurzzeitigen Änderung mit Rücksprung in den Ausgangszustands des Bit-Signals mit zeitlichem Einsprungpunkt ausgewertet wird. Die Größe des Array wird durch die größte Tastenbestätigungszeit bestimmt.

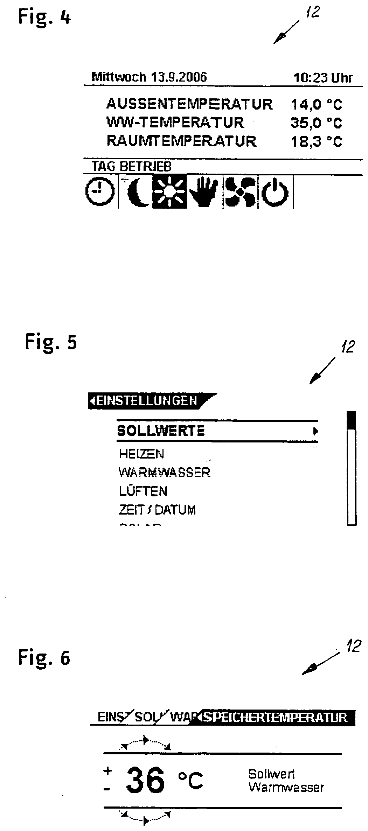

In Fig. 4 ist ein vorteilhafter Anzeigezustand des Displays außerhalb der Zeiten einer Bedienung gezeigt. Es werden Istwerte wie die Außentemperatur, eine Warmwassertemperatur und eine Raumtemperatur sowie der Betriebszustand der Wärmepumpe und Datum- und Zeitangaben angezeigt. Um die Vorrichtung 10 nun zu bedienen, muss der Bediener das Eingabefeld 11 oder eine Taste S1 oder S2 für einen vorgegebenen Zeitraum drücken, dies sind im Ausführungsbeispiel 5 sek. In diesen 5 sek. wird zunächst die Bedingung scharfgeschaltet und die Vorrichtung "aufgeweckt". Dies wird am Display auch angezeigt, insbesondere dass eine Empfindlichkeitsanpassung erfolgt. Optional wird angezeigt, dass die Empfindlichkeitsanpassung 5 sek. dauert. Danach springt das Display in vorteilhafter Weise in ein Menü, in dem z.B. Sollwerte und andere Einstellungen eingegeben werden können. Die einzustellenden Werte werden insbesondere durch eine drehende Bewegung des Fingers auf dem Eingabefeld 11 ausgewählt, d.h. durch eine rotierende Bewegung des Fingers auf dem Eingabefeld 11 werden aus dem Menü, wie dies in Fig. 5 dargestellt ist, entsprechende Menüpunkte ausgewählt. Danach, wenn z.B. die Solltemperatur des Warmwassers (vgl. Fig. 6) geändert werden soll, erfolgt ebenfalls eine Änderung des Sollwertes der Warmwassertemperatur durch eine rotierende Bewegung des Fingers auf dem Eingabefeld 11. Vorteilhaft ist es, dass der Wert steigt, wenn sich der Finger im Uhrzeigersinn bewegt, und sich der Wert vermindert, wenn er sich gegen den Uhrzeigersinn bewegt. Am Display wird der aktuelle Sollwert jeweils angezeigt, und durch rotierende Pfeile, die um den Sollwert angeordnet sind, wird signalisiert, dass eine Änderung erfolgt, was auch durch die entsprechende Änderung einer Ziffer, die den Sollwert darstellt, erfolgt.

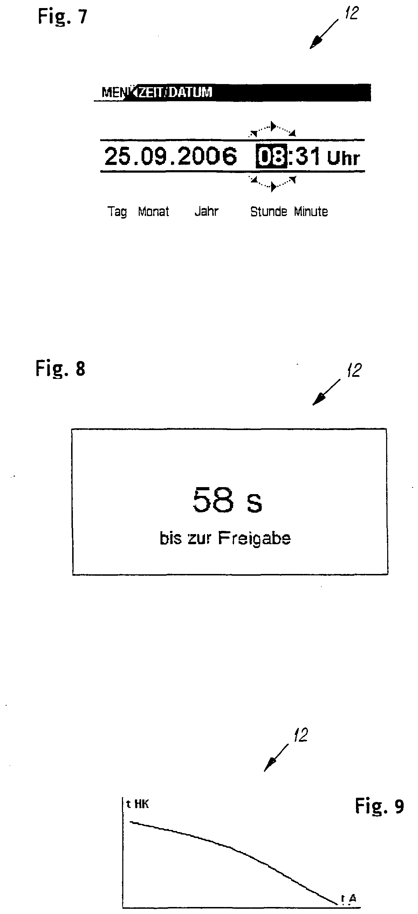

In Fig. 7 ist die Änderung der Zeit dargestellt. Um die Ziffer '08 Uhr' herum sind kreisförmig Pfeile angeordnet, die in vorteilhafter Weise in der Richtung rotieren, in die sich der Finger auf dem Sensor 13 bzw. dem Eingabefeld 11 bewegt. Der Bediener sieht durch die schwarze Hinterlegung der Ziffer '08' weiterhin eindeutig, welcher Parameter gerade geändert wird.

In Fig. 8 ist gezeigt, welche Anzeige auf dem Display erscheint, wenn die Wischfunktion aktiv ist. Damit der Benutzer weiß, dass die Vorrichtung gerade gesperrt ist, wird angezeigt, welcher Zeitraum (hier sind es gerade noch 58 sek.) bis zur Freigabe der Vorrichtung noch abläuft.

In Fig. 9 ist eine typische Heizkurve gezeigt, die am Display angezeigt wird, wenn eine entsprechende Heizkurve eingestellt wird. Somit wird am Display ein Graph, z.B. eine Heizkurve, interaktiv durch eine Drehbewegung, am Eingabefeld geändert und dabei angezeigt.

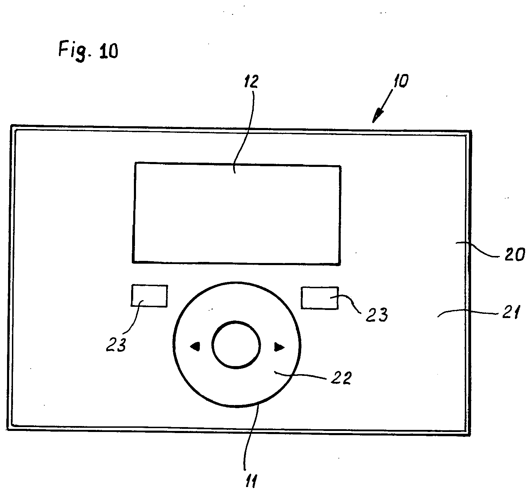

Fig. 10 zeigt die Vorrichtung 10 mit dem Eingabefeld 11 und dem Display 12. Hinter dem Eingabefeld 11 ist der Sensor 13 sowie die Auswerteelektronik 14 angeordnet (in Fig. 10 nicht sichtbar).
Der nicht näher dargestellte Sensor 13 ist hinter einer harten Platte 21 eines Gehäuses 20 angeordnet. Die Platte 21 ist geschlossen und einstückig ausgebildet. Das Eingabefeld 11 weist eine Vertiefung 22 zum Führen eines elektrisch leitfähigen Gegenstandes, insbesondere eines Fingers, auf. In unmittelbarer Nähe des Sensors 13 ist wenigstens ein Tastfeld 23 angeordnet.

## Patentansprüche

1. Haustechnikregler mit einer Vorrichtung (10) enthaltend ein Eingabefeld (11), ein Display (12), eine Auswerteelektronik (14) und einer Steuerungs- und/oder Regelungs-Elektronik (30),
wobei das Eingabefeld (11) wenigstens einen näherungssensitiven Sensor (13) aufweist, der mit einer Auswerteelektronik (14) verbunden ist, die bei einer Berührung oder einer starken Annäherung eines elektrisch leitfähigen Gegenstandes an die Sensorfläche des Sensors (13) eine Änderung des elektrischen Zustands des Sensors (13) erfasst und dementsprechend ein Positionssignal an eine Steuerungs- und/oder Regelungs-Elektronik (30) abgibt,
**dadurch gekennzeichnet,**
**dass** der Sensor (13) hinter einer harten Platte (21) eines Gehäuses (20) des Haustechnikreglers angeordnet ist, dass die Platte (21) geschlossen und einstückig ausgebildet ist und dass der Sensor (13) und die Auswerteelektronik (14) mit einer ersten Schnittstelle (31) verbunden sind, und der Haustechnikregler über eine zweite Schnittstelle (32) mit der Steuerungs- und/oder Regelungs-Elektronik (30) verbunden ist, und
wobei die Platte (21) ein durchsichtiges Material im Bereich des Displays (12) und ein undurchsichtiges Material außerhalb des Displays (12) aufweist, **dadurch gekennzeichnet, dass** der Sensor (13) eine kreisrunde Sensorfläche hat, und dass die Vorrichtung (10) nach Ablauf einer Zeit nach einer letzten Bedienung, in einen Schlafzustand oder deaktivierten Grundzustand fällt,
wobei, wenn sich das Bedienteil im deaktivierten Grundzustand, dem Schlafzustand befindet, ein kurzzeitiges Berühren des Sensorfeldes (13) nicht zu einem Scrollen oder einer Eingabebestätigung führt,
wobei die Vorrichtung (10) aus dem deaktivierten Grundzustand oder aus dem Schlafzustand in einen Bedienzustand umschaltet, wenn das Sensorfeld (13) vom Benutzer länger als einen vorgegebenen Mindestzeitraum lang gedrückt gehalten wird.

2. Haustechnikregler nach Anspruch 1,
**dadurch gekennzeichnet,**
**dass** die Platte (21) im Bereich des Sensors (13) eine Vertiefung (22) zum Führen des elektrisch leitfähigen Gegenstandes, insbesondere eines Fingers, aufweist.

3. Haustechnikregler nach Anspruch 1 oder 2,
**dadurch gekennzeichnet,**
**dass** in unmittelbarer Nähe Sensors (13) wenigstens ein Tastfeld (23) angeordnet ist.

4. Haustechnikregler nach einem oder mehreren der vorhergehenden Ansprüche,
**dadurch gekennzeichnet,**
**dass** die Platte (21) aus einem nichtmetallischen Werkstoff, vorzugsweise Kunststoff oder Glas, besteht.

5. Haustechnikregler nach einem oder mehreren der vorhergehenden Ansprüche,
**dadurch gekennzeichnet,**
**dass** das Display (12) über eine dritte Schnittstelle (33) mit der Steuer- und/oder Regelungselektronik (30) verbunden ist.

6. Verfahren zur Regelung und/oder Steuerung eines Haustechnikgerätes mit einer Vorrichtung (10), die ein Eingabefeld (11) und ein Display (12) aufweist, wobei das Eingabefeld (11) wenigstens einen näherungssensitiven Sensor (13) mit einer kreisrunden Sensorfläche enthält, der bei einer Berührung oder einer starken Annäherung eines elektrisch leitfähigen Gegenstandes an die Sensorfläche des Sensors (13) den elektrischen Zustand des Sensors (13) oder eine Änderung des Zustands erfasst und dementsprechend ein Positionssignal an eine Steuerungs- und/oder Regelungs-Elektronik (30) abgibt,
enthaltend den Verfahrensschritt,
dass die Steuer- und/oder Regelungselektronik (30) zwischen einer Funktion des Sensors (13) als Taste und als Inkrementalgeber unterscheidet,
wobei eine Taste (S1) als getastet erkannt wird, wenn ein Wert der Auswerteelektronik (14) in einem definierten Zeitfenster in einem vorgegebenen Wertebereich angestanden hat und eine Inkremental- oder Drehbewegung erkannt wird, wenn sich der Wert aufeinanderfolgend vergrößert oder verkleinert, **dadurch gekennzeichnet, dass** die Vorrichtung (10) nach Ablauf einer Zeit nach einer letzten Bedienung, in einen Schlafzustand oder deaktivierten Grundzustand fällt,
wobei, wenn sich das Bedienteil im deaktivierten Grundzustand, dem Schlafzustand befindet, ein kurzzeitiges Berühren des Sensorfeldes (13) nicht zu einem Scrollen oder einer Eingabebestätigung führt,
wobei die Vorrichtung (10) aus dem deaktivierten Grundzustand oder aus dem Schlafzustand in einen Bedienzustand umschaltet, wenn das Sensorfeld (13) vom Benutzer länger als einen vorgegebenen Mindestzeitraum lang gedrückt gehalten wird.

7. Verfahren nach Anspruch 6,
**dadurch gekennzeichnet,**
**dass** das definierte Zeitfenster 50 - 800 ms umfasst.

8. Verfahren nach Anspruch 6 oder 7,
**dadurch gekennzeichnet,**
**dass** eine Inkremental- oder Drehbewegung erkannt wird, wenn wenigstens drei verschiedene, größer oder kleiner werdende Werte in der Steuerungs- und/oder Regelungs-Elektronik (30) in dem definierten Zeitfenster erfasst werden.

9. Verfahren nach einem oder mehreren der Ansprüche 6 bis 8,
enthaltend den Verfahrensschritt,
dass die Steuerung und/oder Regelung (30) unbenötigte Teile, insbesondere einer Wärmepumpe, einer Solaranlage, einer Fotovoltaikanlage, eines Lüftungsgeräts, eines elektrischen Heizgerätes, eines Warmwasserbereiters oder des Displays (12), abschaltet oder dessen Beleuchtung reduziert.

10. Verfahren nach einem oder mehreren der Ansprüche 6 bis 9,
enthaltend den Verfahrensschritt,
dass die Vorrichtung (10) eine Empfindlichkeitsanpassung durchführt, insbesondere bei einer ersten Berührung des Sensors (13), um die Vorrichtung (10) zu bedienen, wobei die Empfindlichkeit nach einer ersten Berührung so geändert wird, dass kein Signal, keine Signaländerung oder Position erkannt wird und die Empfindlichkeit dann so lange erhöht wird, bis eine optimale Erkennung der Berührung entsprechend einer vorgegebenen Intensität erfolgt.

11. Verfahren nach einem oder mehreren der Ansprüche 6 bis 10,
enthaltend den Verfahrensschritt,
dass, ohne dass der Schlafmodus abgewartet werden muss, über eine Wischfunktion eine spontane Sperrung des Eingabefeldes (11) für einen vorgegebenen Zeitraum von ca. 15 s - 5 min, insbesondere ca. 60 s eingeleitet wird, wenn ein Menüpunkt 'Wischfunktion' ausgewählt und bestätigt wird.

12. Verfahren nach einem oder mehreren der Ansprüche 6 bis 11,
enthaltend den Verfahrensschritt,
dass die normale Schrittweite beim Drehen oder Scrollen auf dem Eingabefeld (11), abhängig von einem Differenzwert, der bei einem ständigen Vergleich der Positionswerte zum Zeitpunkt x mit dem Positionswert x-1 gebildet wird, vervielfacht wird, damit der gewünschte Wert schneller erreicht wird.

13. Verfahren zur Regelung und/oder Steuerung eines Haustechnikgerätes nach einem der Ansprüche 6 bis 12,
wobei abhängig von der Dauer, in der der Gegenstand auf den Sensor wirkt und ein Wert der Auswerteelektronik (14) angestanden hat, unterschiedliche Bedienfunktionen bereitgestellt werden.

## Claims

1. Home technology controller with a device (10) including an input field (11), a display (12), an electronic evaluation unit (14) and an electronic control unit (30),
wherein the input field (11) has at least one proximity-sensitive sensor (13), which is connected to an electronic evaluation unit (14), which, when an electroconductive object contacts or comes into close proximity to the sensor surface of the sensor (13), detects a change in the electrical state of the sensor (13) and emits a position signal to an electronic control unit (30) accordingly,
**characterised in that**
the sensor (13) is arranged behind a hard panel (21) of a housing (20) of the home technology controller, **in that** the panel (21) is sealed and is formed in one piece and **in that** the sensor (13) and the electronic evaluation unit (14) are connected to a first interface (31), and the home technology controller is connected via a second interface (32) to the electronic control unit (30), and
wherein the panel (21) consists of a transparent material in the region of the display (12) and a non-transparent material outside the display (12),
**characterised in that** the sensor (13) has a circular sensor surface and **in that** the device (10), after a time period from its last operation has elapsed, goes into a sleep mode or deactivated basic mode,
wherein, when the operating unit is in the deactivated basic mode, the sleep mode, a brief contact with the sensor field (13) does not result in scrolling or input confirmation,
wherein the device (10) switches from the deactivated basic mode or from the sleep mode into an operating mode when the sensor field (13) is pressed by the user for longer than a predefined minimum time period.

2. Home technology controller according to claim 1,
**characterised in that**
the panel (21) has a depression (22) in the region of the sensor (13) for guiding the electroconductive object, in particular a finger.

3. Home technology controller according to claim 1 or 2,
**characterised in that**
at least one touch pad (23) is arranged in the immediate vicinity of the sensor (13).

4. Home technology controller according to one or more of the preceding claims,
**characterised in that**
the panel (21) consists of a non-metal material, preferably plastic or glass. and **in that** the plate (21), at least in the region of the display (12), is made of a transparent material

5. Home technology controller according to one or more of the preceding claims,
**characterised in that**
the display (12) is connected via a third interface (33) to the electronic control unit (30).

6. Method for controlling a home technology appliance with a device (10) which has an input field (11) and a display (12), wherein the input field (11) includes at least one proximity-sensitive sensor (13) with a circular sensor surface, which, when an electroconductive object contacts or comes into close proximity to the sensor surface of the sensor (13), detects the electrical state of the sensor (13) or a change in its state and emits a position signal to an electronic control unit (30) accordingly,
including the method step
that the electronic control unit (30) distinguishes between a function of the sensor (13) as a button and as an incremental encoder, wherein a button (S1) is identified as pressed, when a value of the electronic evaluation unit (14) has been present in a defined time frame in a predefined value range and an incremental or rotary movement is detected when the value increases or decreases sequentially,
²[characterised in that]²
the device (10), after a time period from its last operation has elapsed, goes into a sleep mode or deactivated basic mode, wherein, when the operating unit is in the deactivated basic mode, the sleep mode, brief contact with the sensor field (13) does not result in scrolling or input confirmation,
wherein the device (10) switches from the deactivated basic mode or from the sleep mode into an operating mode when the sensor field (13) is pressed by the user for longer than a predefined minimum time period.

7. Method according to claim 6,
**characterised in that**
the defined time frame comprises 50 - 800 ms.

8. Method according to claim 6 or 7,
**characterised in that**
an incremental or rotary movement is identified if at least three different, increasing or decreasing values are detected in the electronic control unit (30) in the defined time frame.

9. Method according to one or more of claims 6 to 8,
including the method step
that the control unit (30) switches off unnecessary components, in particular a heat pump, a solar thermal system, a photovoltaic system, a ventilation unit, an electric heater, a water heater or the display (12) or reduces the illumination thereof.

10. Method according to one or more of claims 6 to 9,
including the method step
that the device (10) performs a sensitivity adjustment, particularly upon a first contact with the sensor (13) for operating the device (10), wherein the sensitivity is adjusted after a first contact so that no signal, no signal change or position is identified and the sensitivity is then increased until there is optimal identification of the contact according to a predefined intensity.

11. Method according to one or more of claims 6 to 10,
including the method step
that, without having to wait for the sleep mode, a spontaneous locking of the input field (11) is initiated by means of a wipe function for a predefined time period of about 15 s - 5 min., specifically about 60 s, when a menu option 'wipe function' is selected and confirmed.

12. Method according to one or more of claims 6 to 11,
including the method step
that the normal increment when rotating or scrolling on the input field (11) is multiplied, depending on a differential value, which is formed with a continual comparison of the position values at time point x with the position value x-1, so that the desired value is reached more rapidly.

13. Method for controlling a home technology appliance according to any of claims 6 to 12, wherein, depending on the time period in which the object acts on the sensor and in which a value of the electronic evaluation unit (14) has been pending, different operating functions are provided.

## Revendications

1. Régulateur domotique doté d'un dispositif (10) comprenant un champ de saisie (11), un écran (12), un système électronique d'évaluation (14) et un système électronique de commande et/ou de régulation (30),
le champ de saisie (11) présentant au moins un capteur de proximité (13) connecté à un système électronique d'évaluation (14) qui perçoit un changement de l'état électrique du capteur (13) lorsqu'un objet électroconducteur touche ou est fortement rapproché de la surface de détection du capteur (13), et envoie en conséquence un signal de position à un système électronique de commande et/ou de régulation (30),
**caractérisé en ce**
**que** le capteur (13) est agencé derrière une plaque dure (21) d'un boîtier (20) du régulateur domotique, que la plaque (21) est conçue fermée et d'un seul tenant et que le capteur (13) et le système électronique d'évaluation (14) sont connectés à une première interface (31), et le régulateur domotique est connecté au système électronique de commande et/ou de régulation (30) par une deuxième interface (32), et
la plaque (21) présentant un matériau transparent dans la zone de l'écran (12) et un matériau opaque en dehors de l'écran (12),
**caractérisé en ce que** le capteur (13) a une surface de détection circulaire, et que le dispositif (10) passe dans un état de veille ou un état initial désactivé au bout d'un moment suite à une dernière manipulation,
un contact par toucher de courte durée du champ du capteur (13) n'entraînant pas un défilement ou une confirmation de saisie lorsque l'unité de commande se trouve en l'état initial désactivé, l'état de veille,
le dispositif (10) commutant de l'état initial désactivé ou de l'état de veille à un état d'utilisation lorsque l'utilisateur garde le champ du capteur (13) appuyé plus longtemps qu'une durée minimum prédéfinie.

2. Régulateur domotique selon la revendication 1,
**caractérisé en ce**
**que** la plaque (21) dans la zone du capteur (13) présente un renfoncement (22) pour y placer l'objet électroconducteur, notamment un doigt.

3. Régulateur domotique selon la revendication 1 ou 2,
**caractérisé en ce**
**qu'**est au moins agencée une touche tactile (23) à proximité immédiate du capteur (13).

4. Régulateur domotique selon l'une quelconque ou plusieurs des revendications précédentes, **caractérisé en ce**
**que** la plaque (21) est constituée d'un matériau non métallique, de préférence en matière synthétique ou en verre

5. Régulateur domotique selon l'une quelconque ou plusieurs des revendications précédentes,
**caractérisé en ce**
**que** l'écran (12) est connecté au système électronique de commande et/ou de régulation (30) par une troisième interface (33).

6. Procédé de régulation et/ou de commande d'un appareil domotique doté d'un dispositif (10) présentant un champ de saisie (11) et un écran (12), le champ de saisie (11) comprenant au moins un capteur de proximité (13) doté d'une surface de détection circulaire, lequel perçoit l'état électrique du capteur (13) ou un changement de l'état lorsqu'un objet électroconducteur touche ou est fortement rapproché de la surface de détection du capteur (13), et envoie en conséquence un signal de position à un système électronique de commande et/ou de régulation (30),
comprenant l'étape de procédé
à laquelle le système électronique de commande et/ou de régulation (30) fait la distinction entre une fonction du capteur (13) en tant que touche et en tant que codeur incrémental, une touche (S1) étant reconnue comme palpée si une valeur du système électronique d'évaluation (14) se maintient dans une plage de valeurs prédéterminée au cours d'un laps de temps défini et un mouvement incrémental ou de rotation est détecté lorsque la valeur augmente ou diminue successivement,
²[caractérisé en ce que]²
le dispositif (10) passe dans un état de veille ou un état initial désactivé au bout d'un moment suite à une dernière manipulation, un contact par toucher de courte durée du champ du capteur (13) n'entraînant pas un défilement ou une confirmation de saisie lorsque l'unité de commande se trouve en l'état initial désactivé, l'état de veille,
le dispositif (10) commutant de l'état initial désactivé ou de l'état de veille à un état d'utilisation lorsque l'utilisateur garde le champ du capteur (13) appuyé plus longtemps qu'une durée minimum prédéfinie.

7. Procédé selon la revendication 6,
**caractérisé en ce**
**que** le laps de temps défini comprend 50 à 800 ms.

8. Procédé selon la revendication 6 ou 7,
**caractérisé en ce**
**qu'**est détecté un mouvement incrémental ou de rotation si au moins trois valeurs différentes croissantes ou décroissantes sont perçues dans le système électronique de commande et/ou de régulation (30) dans le laps de temps défini.

9. Procédé selon l'une quelconque ou plusieurs des revendications 6 à 8,
comprenant l'étape de procédé
à laquelle la commande et/ou la régulation (30) éteint ou réduit l'éclairage d'éléments non nécessaires, notamment d'une pompe à chaleur, d'une installation solaire, d'une installation photovoltaïque, d'un ventilateur, d'un chauffage électrique, d'un préparateur d'eau chaude sanitaire ou de l'écran (12).

10. Procédé selon l'une quelconque ou plusieurs des revendications 6 à 9,
comprenant l'étape de procédé
à laquelle le dispositif (10) exécute un ajustement de sensibilité, notamment lors d'un premier contact par toucher du capteur (13) pour utiliser le dispositif (10), la sensibilité étant modifiée à la suite d'un premier contact par toucher de telle sorte qu'aucun signal, aucun changement de signal ou position n'est détecté et que la sensibilité est augmentée jusqu'à une détection optimale du contact par toucher en fonction d'une intensité prédéterminée.

11. Procédé selon l'une quelconque ou plusieurs des revendications 6 à 10,
comprenant l'étape de procédé
à laquelle, sans devoir attendre le mode de veille, une fonction de balayage permet d'engager un verrouillage spontané du champ de saisie (11) pour un laps de temps prédéterminé d'environ 15 s à 5 min, notamment d'environ 60 s, si un élément de menu
« fonction de balayage » est sélectionné et confirmé.

12. Procédé selon l'une quelconque ou plusieurs des revendications 6 à 11,
comprenant l'étape de procédé
à laquelle l'incrément normal au moment de la rotation ou du défilement sur le champ de saisie (11) est multiplié, en fonction d'une valeur différentielle formée par comparaison constante entre les valeurs de position au moment x et la valeur de position x-1 pour atteindre plus rapidement la valeur souhaitée.

13. Procédé de régulation et/ou de commande d'un appareil domotique selon l'une quelconque des recommandations 6 à 12,
des fonctions d'utilisation différentes étant fournies en fonction de la durée pendant laquelle l'objet agit sur le capteur et une valeur du système électronique d'évaluation (14) se maintient.
